# EUROPÄISCHE PATENTSCHRIFT

(11) **EP 1 195 275 B1**
(45) Veröffentlichungstag und Bekanntmachung des Hinweises auf die Patenterteilung: **26.08.2009**
(21) Anmeldenummer: 01123814.4
(22) Anmeldetag: 05.10.2001
(51) Int. Cl.: B60H 1/00

(54) **Vorrichtung zur Ermittlung der Temperatur im Innenraum eines Fahrzeuges**
Device for estimating the temperature in the passenger compartment of a vehicle
Dispositif pour évaluer la température dans l'habitacle d'un véhicule

(30) Priorität: 06.10.2000 DE 10049979
(43) Veröffentlichungstag der Anmeldung: 10.04.2002
(73) Patentinhaber: Behr-Hella Thermocontrol GmbH, D-70469 Stuttgart (DE)
(72) Erfinder: Knittel, Otto, 59494 Soest (DE); Röhling, Hans-Dieter, 59558 Lippstadt (DE); Stich, Bernd, 33142 Büren (DE); Trapp, Ralph Dr., 33102 Paderborn (DE)
(74) Vertreter: Hilleringmann, Jochen

(56) Entgegenhaltungen:
- DE-A- 19 621 092
- DE-A- 19 627 414
- DE-A- 19 842 895
- DE-A1- 19 504 572
- DE-A1- 19 802 045
- WALLISER GERHARD: "Elektronik im Kraftfahrzeugwesen" 1997, , 415 381691 , XP007907559 * Seite 466 - Seite 482 *

## Beschreibung

Die Erfindung betrifft eine Vorrichtung zur Ermittlung der Temperatur im Innenraum eines Fahrzeuges.

Mit Klimaanlagen ausgestattete Fahrzeuge verfügen über einen Innenraum-Temperaturfühler, der aus Design-Gründen versteckt, zumeist im Klimaanlagen-Steuergerät angeordnet ist. Damit der Innenraum-Temperaturfühler die Temperatur der Luft im Fahrgastraum messen kann, streicht an dem Innenraum-Temperaturfühler ein Luftstrom vorbei, der von einem ebenfalls im Steuergerät angeordneten Belüftungsmotor erzeugt wird. Zu diesem Zweck ist der Innenraum-Temperaturfühler innerhalb eines Kanals angeordnet, in den über eine zum Fahrgastraum hin angeordnete Öffnung durch den Belüftungsmotor Luft angesaugt wird.

Dieses Konzept der messtechnischen Ermittlung der Innenraumtemperatur hat sich in der Praxis grundsätzlich bewährt. Es ist allerdings anzumerken, dass die bekannten Systeme nicht frei von Fehlern sind. So ist das System beispielsweise durch das Vorhandensein des Belüftungsmotors gegen Störungen anfällig, und zwar einerseits was die Elektrik und andererseits die Aufrechterhaltung des Luftstroms anbelangt. Wenn nämlich beispielsweise der Strömungswiderstand auf Grund einer zugesetzten Lufteinlassöffnung des Kanals steigt, so ist der Innenraum-Temperaturfühler nicht mehr im ausreichenden Maße belüftet und kann daher keine die Innenraumtemperatur im ausreichend genauen Maße repräsentierenden Messsignale liefern. Darüber hinaus kann der Innenraum-Temperaturfühler auf Grund von in der Strömungsluft mitgeführten Partikeln verschmutzen und dadurch Messungenauigkeiten aufweisen. Diese Gefahr besteht insbesondere in Fahrzeugen, in denen geraucht wird.

Es ist schon mehrfach versucht worden, die Temperaturerfassung im Innenraum eines Fahrzeuges mittels eines Temperatursensors zu realisieren, der "unbelüftet" ist.

So beschreibt beispielsweise die DE-C-37 22 000 eine Vorrichtung zur Innenraumtemperaturmessung, bei der zwei Temperatursensoren eingesetzt werden. Während der eine Temperatursensor in der Nähe einer den Innenraum begrenzenden Wand angeordnet und von der Luft des Innenraums umgeben ist, ist ein zweiter Temperatursensor direkt an der Oberfläche der Wand angeordnet. Über eine Differenzmessung der Ausgangssignale beider Temperatursensoren bei zusätzlicher Berücksichtigung eines Entkopplungsfaktors wird dann die tatsächliche Innenraumtemperatur ermittelt. Eine weitere Vorrichtung zur Innenraumtemperaturmessung ist in DE-A-41 30 063 beschrieben.

Aus DE-A-34 40 880 ist eine Temperaturmessvorrichtung zur Ermittlung der Lufttemperatur im Innenraum eines Fahrzeuges bekannt, bei der nahe eines temperaturempfindlichen Messelements ein Wärmeleitelement angeordnet ist, das seinerseits mit einer Außenwand des Fahrzeug-Innenraums thermisch gekoppelt ist. Auf diese Weise ist im Messsignal des Messelements auch der Einfluss der Temperatur der benachbarten zur Temperaturmessvorrichtung angeordneten Außenwand des Fahrzeuginnenraums auf die Lufttemperatur berücksichtigt.

DE-A-198 16 941 offenbart eine Temperaturmessanordnung, bei der zwischen einer Messstelle und einem Temperatursensor ein Wärmeleitelement angeordnet ist.

Aus DE-A-196 21 092 ist es bekannt, bei einem im Dachhimmel eines Kraftfahrzeuges angeordneten Temperatursensors das als Thermistor ausgebildete Sensorelement bis in den Innenraum des Fahrzeuges vorstehen zu lassen.

Walliser u.a. Elektronik im Kraftfahrzeugwesen; 2. Auflage 1997, Seiten 466-482, beschreibt die Ausstattung eines Klimasystems für KFZ mit Sensoren zur Messung von physikalischen Größen wie Temperatur, Strahlung und Luftzustand sowie ein Verfahren zur Bestimmung der tatsächlichen Innenraumtemperatur aus den Messwerten - Oberflächentemperatur- und - Fühlertemperatur -.

In DE-A-198 02 045 und in DE-C-195 04 572 ist eine Temperaturfühleranordnung beschrieben, bei der ein Temperaturfühler auf einem wärmeleitenden Element angeordnet ist, das einer Luftströmung angesetzt ist, deren Temperatur gemessen werden soll.

Schließlich ist in DE-U-88 12 412 ein Temperaturmessfühler für einen Kühlturm beschrieben, der zur Unterdrückung kurzzeitiger Schwankungen der zu messenden Lufttemperatur in gut wärmeleitender Verbindung auf einer gleichfalls gut Wärme leitenden Trägerplatte angeordnet ist, die dem zu messenden Medium ausgesetzt ist.

Die bekannten Innenraum-Temperaturmesssysteme mit unbelüfteten Fühlern sind leider noch nicht so weit ausgereift, dass die Innenraumtemperatur in jedem Temperaturzustand, in dem sich der Fahrgastraum und die an diesen angrenzenden Fahrzeugkomponenten befinden, genau ermittelt werden kann.

Der Erfindung liegt die Aufgabe zu Grunde, eine Vorrichtung zur Ermittlung der Innenraumtemperatur eines Fahrzeuges zu schaffen, mit der die Temperatur genau gemessen bzw. ermittelt werden kann.

Zur Lösung dieser Aufgabe wird mit der Erfindung eine Vorrichtung zur Innenraum-Temperaturermittlung bei einem Fahrzeug vorgeschlagen, die versehen ist mit den Merkmalen des Anspruchs 1. Einzelne Ausgestaltungen der Erfindung sind Gegenstand der Unteransprüche.

Bei Einbau der erfindungsgemäßen Vorrichtung in einem Fahrzeug befindet sich der Temperaturfühler, der die Temperatur im Innenraum des Fahrzeuges erfassen soll, hinter einer den Innenraum begrenzenden Wand. Vorzugsweise handelt es sich bei dieser Wand um die Frontblende einer Fahrzeugkomponente, insbesondere um die Frontblende des Steuergeräts für eine Fahrzeugklimaanlage. Aber auch jeder andere Wand- bzw. Oberflächenbereich des Armaturenbretts mit an dieses angrenzenden Ein- bzw. Anbauten ist denkbar. Durch eine Öffnung in der Wand ragt ein Wärmeleitungselement, das thermisch mit dem Temperaturfühler gekoppelt ist. Durch das Wärmeleitungselement wird die Wärmeleitung aus dem Innenraum zum Temperaturfühler erhöht. Das Wärmeleitungselement ist allein durch eine Elektrode eines Sonnensensors gebildet, der in der Öffnung der Wand angeordnet ist. Wenn im Folgenden von dem Wärmeleitungselement gesprochen wird, ist damit die Elektrode gemeint.

Um die Temperatureinflüsse aus der Umgebung des Temperaturfühlers weiter zu reduzieren, ist es zweckmäßig, wenn der auf eine Sonneneinstrahlung einer zum Temperaturfühler benachbart angeordneten Komponente oder Bauteil zurückzuführende Temperatureinfluss kompensiert wird. Hierzu dient nach der Erfindung der Sonnensensor. Die Verarbeitungseinheit empfängt also das Ausgangssignal des Sonnensensors und benutzt dieses, um den auf die Sonneneinstrahlung zurückzuführenden Einfluss der Erwärmung des Wandbereichs um die Wandöffnung herum im vom Temperaturfühler gelieferten Messsignal zu korrigieren.

Durch den erfindungsgemäßen Vorschlag ist es möglich, im Innenraum eines Fahrzeuges zuverlässig und genau die Temperatur messen zu können. Dazu ist nach der Erfindung kein separater Belüftungsmotor erforderlich, was die Funktionsweise der erfindungsgemäßen Vorrichtung verbessert und deren Lebensdauer erhöht. Schließlich ist die erfindungsgemäße Lösung auch kostengünstiger. Vom Komfort her bietet die erfindungsgemäße Lösung den weiteren Vorteil, dass die Gefahr akustischer Belästigungen, wie sie bei Verwendung beispielsweise eines Belüftungsmotors auftreten können, nicht gegeben ist.

Die thermische Kopplung des Temperaturfühlers mit dem Wärmeleitungselement erfolgt zweckmäßigerweise durch eine Kontaktierung des Wärmeleitungselements und dem Gehäuse des Temperaturfühlers oder über eine wärmeleitende Verbindung des Wärmeleitungselements mit einem der Anschlusskontaktelemente des Temperaturfühlers. Die letztgenannte Möglichkeit bietet sich insbesondere dann an, wenn der Temperaturfühler als SMD-Bauteil ausgeführt ist. Ein derartiges Bauteil weist an seinen Anschlusskontaktenden eine relativ große die Leiterbahnen einer Leiterplatine kontaktierende Fläche auf. Damit kann die Leiterbahn zur thermischen Kopplung des Temperaturfühlers und des Wärmeleitungselements verwendet werden, indem nämlich letzteres ebenfalls an der Leiterbahn kontaktiert ist. Die wärmeleitende Verbindung zwischen dem Wärmeleitungselement und dem Temperaturfühler ist umso besser, je dichter die Kontaktpunkte des betreffenden Anschlusskontaktendes des Temperaturfühlers mit der Leiterbahn und des Wärmeleitungselements mit der Leiterbahn auf dieser angeordnet sind.

Um den thermischen Einfluss der in der Umgebung des Temperaturfühlers angeordneten Bauteile, Fahrzeugkomponenten o.dgl. gering zu halten, ist es von Vorteil, wenn der Temperaturfühler gegebenenfalls zusammen mit der Leiterplatine, auf der er angeordnet ist, von einem Wärmeabschirmelement aus einem wärmeisolierenden Material umgeben ist. Als Material bietet sich hier beispielsweise Schaumstoff an, wobei insbesondere offenzelliger Schaumstoff Verwendung finden sollte.

Zur Kompensation thermischer Beeinflussungen, die von angrenzenden Fahrzeugkomponenten herrühren, ist es von Vorteil, wenn ein weiterer Temperaturfühler vorgesehen wird, der diese thermischen Einflüsse messtechnisch erfasst. Zusätzlich oder alternativ können diese thermischen Einflüsse auch anhand von Rechenmodellen bzw. anhand von Betriebsparametern der angrenzenden Fahrzeugkomponenten oder Bauteile ermittelt werden. Aus diesen Betriebsparametern lässt sich dann eine Eigenerwärmung rechnerisch ermitteln. Verantwortlich für eine solche Eigenerwärmung sind insbesondere Lichtquellen, die die Fahrzeugkomponente zur Hinterleuchtung ihrer Frontblende, eines Displays o.dgl. aufweist. Wenn die Betriebsspannung dieser gegebenenfalls dimmbaren Hinterleuchtung zu Grunde gelegt wird, so kann auf die zu erwartende Eigenerwärmung geschlossen werden.

In vorteilhafter Weiterbildung der Erfindung ist ferner vorgesehen, dass die Verarbeitungseinheit ein Differenzierglied mit einer Zeitkonstanten zur Langzeitdifferenzierung des Messsignals des Temperaturfühlers aufweist. Die gleich bleibende oder vorteilhafterweise auch veränderbare Zeitkonstante des Differenziergliedes liegt vorzugsweise zwischen einigen Minuten und einigen 10 Minuten (z.B. 10 bis 30 Minuten) und insbesondere zwischen 2 Minuten und 15 Minuten. Erfindungsgemäß werden das Messsignal des Temperaturfühlers und das differenzierte Messsignal, d.h. das Ausgangssignal des Differenziergliedes in der Verarbeitungseinheit addiert. Die Addition beider Signale repräsentiert die Temperatur im Fahrgastraum des Fahrzeuges. Hierdurch kann die thermische Trägheit von den Temperaturfühler umgebenden Bauteilen o.dgl. kompensiert werden. Anstelle der Differenzierung des Ausgangssignals des Temperaturfühlers kann auch die Differenz zwischen dem Soll- und dem Istwert der Innenraumtemperatur einer Differenzierung unterzogen werden. Insoweit soll unter dem Begriff "Verarbeitungseinheit" im Rahmen dieser Erfindungsbeschreibung auch beispielsweise der Innenraumtemperaturregler einer Fahrzeugklimaanlage verstanden werden. Mit "Messsignal des Temperaturfühlers" ist also dann auch die Regelabweichung des Regelkreises gemeint.

In vorteilhafter Weiterbildung der Erfindung ist in der Verarbeitungseinheit neben dem Differenzierglied auch noch ein Verstärkungsglied mit einem Verstärkungsfaktor angeordnet. Dieses Verstärkungsglied verstärkt das differenzierte Messsignal, also das Ausgangssignal des Differenziergliedes. Zweckmäßigerweise wird die Zeitkonstante des Differenziergliedes und/oder der Verstärkungsfaktor des Verstärkungsgliedes konstant gehalten oder verändert. Die Veränderung erfolgt insbesondere in Abhängigkeit von dem gegebenenfalls kompensierten Messsignal des Temperaturfühlers selbst, der Standzeit und/oder der Umgebungstemperatur des Fahrzeuges, der Abweichung zwischen dem Ist- und dem Sollwert der Fahrgastraumtemperatur oder zwischen dem Ist- und dem Sollwert der Temperatur der in den Fahrgastraum einströmenden Luft und/oder der Kühlwassertemperatur.

Mit der Erfindung wird also vorgeschlagen, die Temperatur im Innenraum eines Fahrzeuges mit Hilfe eines Temperaturfühlers zu erfassen, der hinter einer Oberfläche bzw. einer Wand, die den Innenraum des Fahrzeuges begrenzt, angeordnet ist. Durch das Wärmeleitungselement wird der Wärmetransport zwischen dem Innenraum und dem Temperaturfühler erhöht. Ein (parasitärer) Wärmetransport erfolgt ferner durch eine Eigenerwärmung oder eine Erwärmung infolge von Sonneneinstrahlung der Oberfläche bzw. der Wand, hinter der der Temperaturfühler angeordnet ist, oder benachbarter Bauteile bzw. Fahrzeugkomponenten. Der Temperaturfühler sollte also über eine entsprechende Halterung mit geringen Kontaktflächen möglichst wenig Wärme von den umliegenden Fahrzeugkomponenten, Bauteilen o.dgl. über Wärmeleitungsprozesse aufnehmen oder abgeben können. Zur Minimierung dieser Einflüsse durch über Luft erfolgenden Wärmetransport bietet es sich, um den Temperaturfühler ein Wärmeabschirmelement anzuordnen. Zur Minimierung des Wärmetransports über mit dem Temperaturfühler in Kontakt stehenden Bauteilen (Leiterplatine o.dgl.), ist es zweckmäßig, diese Bauteile in entsprechenden relativ schlecht wärmeleitenden Materialien auszuführen. So könnten beispielsweise die zum Temperaturfühler hin führenden Kontaktbahnen (Leiterbahnen) entsprechend schmal und dünn ausgeführt sein, um eine thermische Entkopplung zwischen dem Temperaturfühler und der mit ihm verbundenen Elektronik sowie der Umgebung um den Temperaturfühler zu realisieren.

Nachfolgend wird anhand der Zeichnung ein Ausführungsbeispiel der Erfindung näher erläutert. Im einzelnen zeigen:
- Fig. 1: eine Ansicht vom Fahrgastraum aus auf die Instrumententafel eines Fahrzeuges mit einem Klimaanlagen-Steuergerät,
- Fig. 2: einen Schnitt entlang der Linie II-II der Fig. 1 zur Verdeutlichung der Anordnung der Sensoren für die Innenraumtemperaturmessung mit unbelüftetem Fühler,
- Fig. 3: einen Schnitt entlang der Linie III-III durch die Frontblende und die hinter dieser angeordneten Bauteile des Klimaanlagen-Steuergeräts zur Verdeutlichung der Sensoranordnung,
- Fig. 4: einen Schnitt entlang der Linie IV-IV der Fig. 3,
- Fig. 5: einen Schnitt entlang der Linie V-V der Fig. 3,
- Fig. 6: einen Schnitt entlang der Linie VI-VI der Fig. 3,
- Fig. 7: einen Schnitt ähnlich dem gemäß Fig. 3 jedoch bei einer Ausgestaltung der erfindungsgemäßen Vorrichtung und
- Fig. 8: ein Blockschaltbild der Beschaltung des unbelüfteten Temperaturfühlers zur Ermittlung der Temperatur im Fahrgastraum.

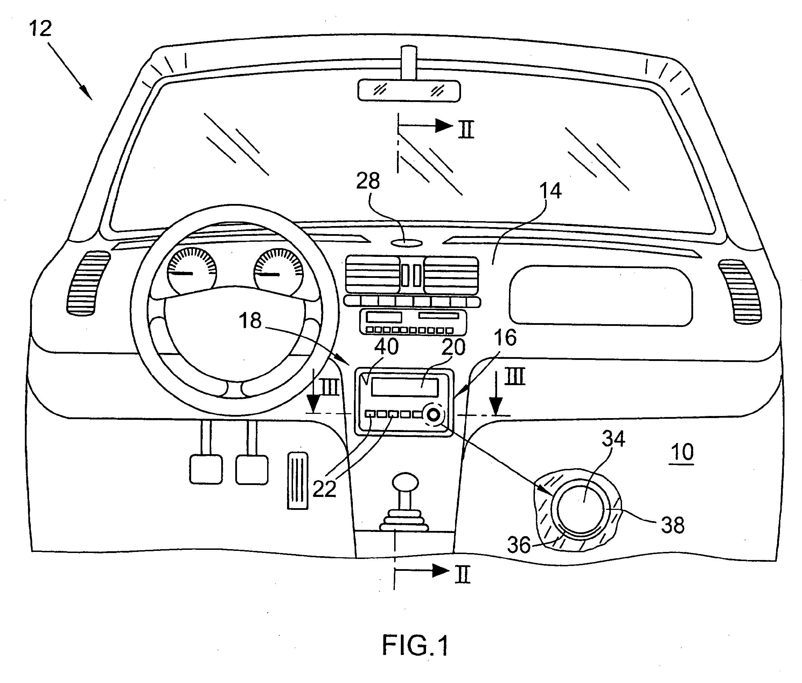

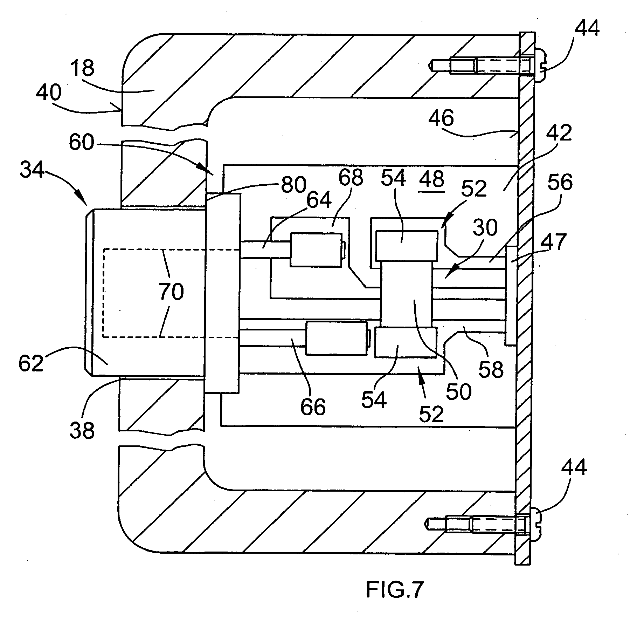

Fig. 7 zeigt eine erfindungsgemäße Ausgestaltung der Vorrichtung zur Ermittlung der Innenraumtemperatur; während die Figuren 1 bis 6 sich nicht auf eine Ausführungsform nach der Erfindung beziehen, zum Verständnis der Fig. 7 jedoch hilfreich sind.

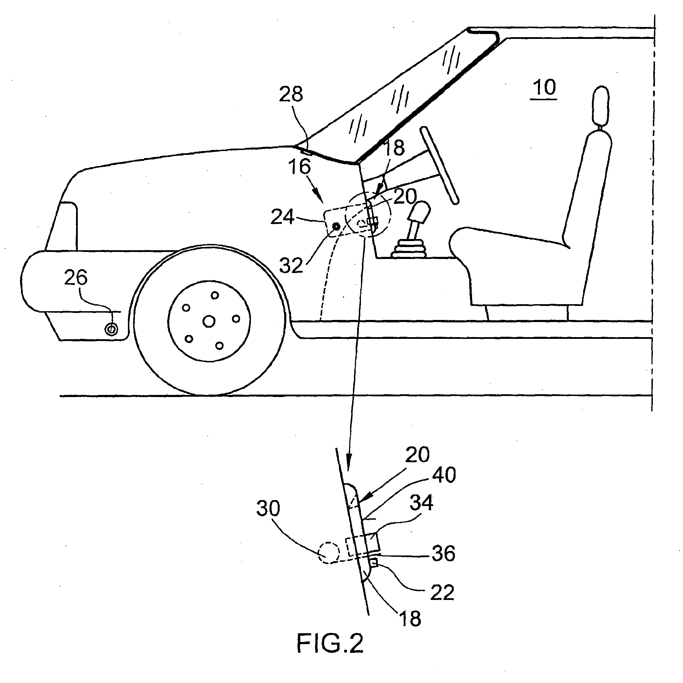

Fig. 1 zeigt eine Ansicht auf die in Fahrtrichtung angeordnete Vorderseite eines Fahrgastraums 10 eines Fahrzeuges 12, das über eine Klimaanlage (Klimaautomatik) verfügt. In der Instrumententafel 14 des Fahrzeuges 12 befindet sich das Klimaanlagen-Steuergerät 16, das eine Frontblende 18 mit einem Display 20 sowie einer Vielzahl von Tasten 22 aufweist. Gemäß Fig. 2 schließt die Frontblende 18 das Steuergerät 16 zum Fahrgastraum 10 hin ab. Das Steuergerät 16 weist ein Gehäuse 24 auf, das in die Instrumententafel 14 eingelassen ist. Neben diversen Sensoren wie Außentemperaturfühler 26 und Sonnensensor 28 weist die Klimaanlage des Fahrzeuges 12 eine Vielzahl von Komponenten auf, auf die an dieser Stelle nicht eingegangen werden soll, da sie für die Erfindung nicht weiter relevant sind.

Bedeutend für die Erfindung hingegen ist die Art und Weise der Messung der Temperatur im Fahrgastraum 10. Zur Ermittlung dieser Innenraumtemperatur ist eine Anordnung von Sensoren vorgesehen, die zwei Temperaturfühler 30,32 sowie einen Sonnensensor 34 (Fotodiode) umfasst. Der erste Temperaturfühler 30 ist dabei hinter der Frontblende 18 des Steuergeräts 16 angeordnet und ist mit einem Wärmeleitungselement 36 wärmeleitend verbunden, das durch eine Öffnung 38 der Frontblende 18 bis in den Fahrgastraum 10 hineinragt. Damit erfasst der erste Temperaturfühler 30 die Temperatur der Luft im Fahrgastraum 10 vor der von der Vorderseite der Frontblende 18 gebildeten Oberfläche 40. Der zweite Temperaturfühler 32 ist im Innern des Gehäuses 24 des Steuergeräts 16 angeordnet und misst die Eigenerwärmung des Steuergeräts 16. Auf diese Weise lässt sich das infolge der Eigenerwärmung des Steuergeräts 16 verfälschte Messsignal des ersten Temperaturfühlers 30 kompensieren. Der Sonnensensor 34 misst die Intensität der auf die Frontblende 18 einfallenden Sonnenstrahlung, so dass sein Ausgangssignal die Erwärmung der Frontblende 18 infolge der Sonneneinstrahlung repräsentiert. Damit wiederum ist es möglich, die Verfälschung des Messsignals des ersten Temperaturfühlers 30 infolge der thermischen Beeinflussung seitens der durch Sonneneinstrahlung erwärmten Frontblende 18 zu kompensieren.

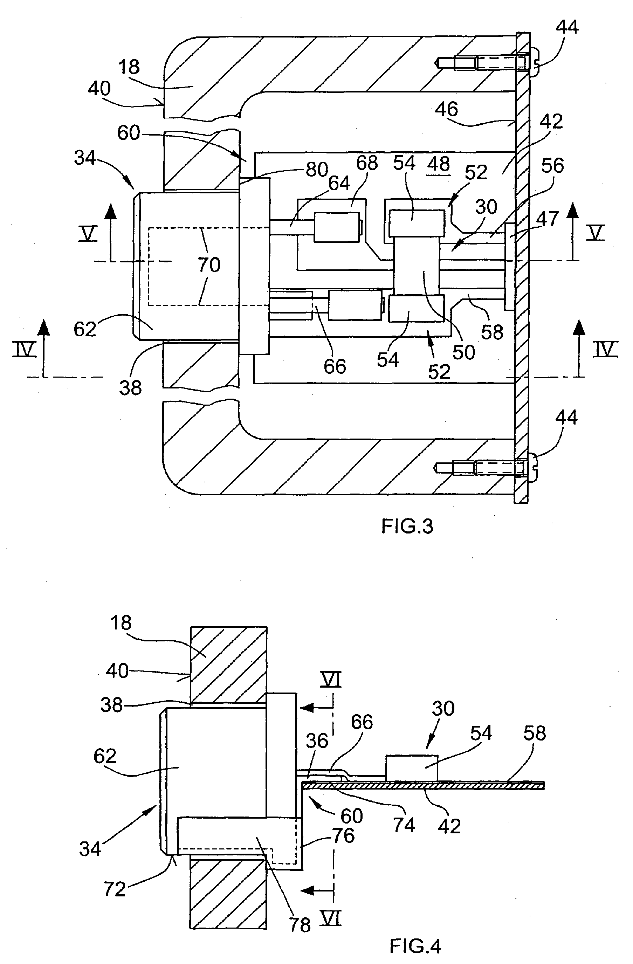

Der Sonnensensor 34 ragt durch die Öffnung 38 der Frontblende 18 hindurch und steht geringfügig über diese über. Durch Einfärbung des Gehäuses des Sonnensensors 34 in der Farbe der Frontblende 18 fällt der Sonnensensor 34 optisch kaum auf. Der genaue Aufbau der hinter bzw. in der Frontblende 18 angeordneten Sensorik wird nachfolgend anhand der Fign. 3 bis 7 erläutert, wobei in Fig. 7 ein erfindungsgemäßes Ausführungsbeispiel dargestellt ist.

Gemäß Fig. 3 befindet sich hinter der Frontblende 18 eine Leiterplatine 42, die mit der Frontblende 18 mittels Schrauben 44 verschraubt ist. Neben einer Vielzahl von elektrischen und elektronischen Bauelementen weist die Leiterplatine 42 auf ihrer der Frontblende 18 zugewandten Vorderseite 46 einen Steckverbinder 47 zur Aufnahme einer Leiterkarte 48 auf. Auf dieser Leiterkarte 48 ist der erste Temperaturfühler 30 angeordnet, der als SMD-Bauteil (z.B. NTC- oder PTC-Transistor) mit einem temperaturempfindlichen Körper 50 und zwei Anschlusskontaktelemente 52 bildende Anschlusskontaktenden 54 ausgeführt ist. Die Leiterkarte 48 weist ferner zwei vom Steckverbinder 47 aus bis zum Temperaturfühler 30 verlaufende Leiterbahnen 56,58 auf, auf denen die Anschlusskontaktenden 54 festgelötet sind. Eine dieser beiden Leiterbahnen (im Ausführungsbeispiel die Leiterbahn 58) ist bis zum nahe der Frontblende 18 angeordneten Ende 60 der Leiterkarte 48 verlängert.

Die Leiterkarte 48 befindet sich hinter der Öffnung 38 der Frontblende 18. An der Leiterkarte 48 ist auch der Sonnensensor 34 angeschlossen und gehalten. Hierzu weist der Sonnensensor 34 zwei aus seinem Gehäuse 62 herausragende Anschlusskontaktelemente 64,66 auf, von denen das Anschlusskontaktelement 66 auf der Leiterbahn 58 in unmittelbarer Nähe des Anschlusskontaktendes 54 des Temperaturfühlers 30 festgelötet ist. Das zweite Anschlusskontaktelement 64 des Sonnensensors 34 ist auf einer Leiterbahn 68 festgelötet, die sich bis zum Steckverbinder 47 erstreckt. Innerhalb des Gehäuses 62 des Sonnensensors 34 befinden sich die bei 70 angedeuteten Elektroden (Anode und Kathode).

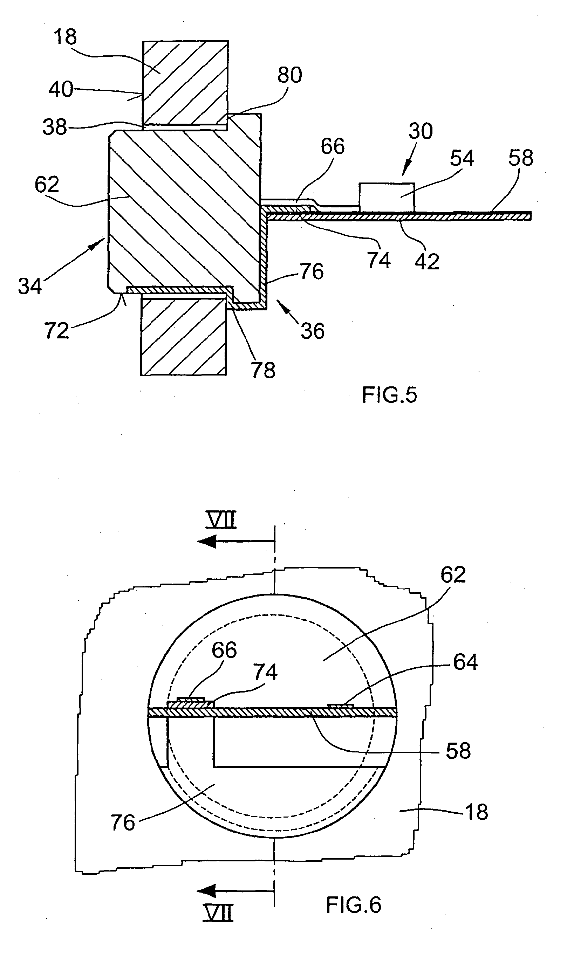

Ebenfalls auf der Leiterbahn 58 befestigt ist das Wärmeleitungselement 36, das über das Ende 60 der Leiterkarte 48 übersteht und als ein Element ausgebildet ist, das die für das Licht durchlässige Außenoberfläche 72 des Sonnensensor-Gehäuses 62 teilweise umschließt. Das Wärmeleitungselement 36 weist also einen mit der Leiterbahn 58 beispielsweise durch Verlöten verbundenen Anlageabschnitt 74 auf, an den sich ein abgewinkelter Abschnitt 76 anschließt, der das Sonnensensor-Gehäuse 62 in dessen unterhalb der Leiterkarte 48 liegenden Bereich teilweise überdeckt. Von diesem Abschnitt 76 aus erstreckt sich ein Umfangsabschnitt 78, der einen Teilbereich der Außenoberfläche 72 überdeckt (siehe hierzu auch die Fign. 5 und 6, in denen die einzelnen zuvor genannten Abschnitte des Wärmeleitungselements 36 erkennbar sind). Insbesondere ist in den Fign. 4 bis 6 zu erkennen, dass der Umfangsabschnitt 78 bis über die von der Vorderseite der Frontblende 18 gebildete Oberfläche 40 übersteht.

Aufgabe des Wärmeleitungselements 36 ist es, für einen verbesserten Wärmetransport aus dem Fahrgastraum 10 des Fahrzeuges zum Temperaturfühler 30 zu sorgen. Die thermische Ankopplung des Wärmeleitungselements 36 an den Temperaturfühler 30 erfolgt über die gemeinsame Kontaktierung auf der Leiterbahn 58. Die Unterbringung des Wärmeleitungselements 36 am bezogen auf die Einbaulage dem Boden des Fahrgastraumes 10 zugewandten unteren Teil der Außenoberfläche des Sensorgehäuses 62 ist aus optischen Gründen vorteilhaft. Wie man insbesondere anhand der Fign. 4 bis 6 erkennen kann, ist der das Sensorgehäuse 62 nach Art einer Schale umschließende Abschnitt 78 des Wärmeleitungselements 36 in die Außenoberfläche 72 des Gehäuses 62 des Sonnensensors 34 eingelassen.

Zur Verhinderung des Durchtritts von Licht aus dem Steuergerät 16 durch den Spalt zwischen der Frontblendenöffnung 38 und dem Sonnensensor 34 weist dieser eine Schulter 80 auf, mit der das Gehäuse 62 von innen an der Frontblende 18 anliegt (siehe auch hier die Fign. 4 bis 6).

Zur weiteren thermischen Isolation des Temperaturfühlers 30 gegenüber seiner Umgebung zwecks Verringerung thermischer Beeinflussungen des Temperaturfühlers 30 ist dieser bzw. die Leiterkarte 48 zumindest an ihrer mit dem Temperaturfühler 30 bestückten Oberseite von einem wärmeisolierenden Material als Abschirmelement umgeben bzw. überdeckt. Dieses Material, bei dem es sich insbesondere um offenzelligen Schaumstoff handelt, ist in den Zeichnungen der Übersichtlichkeit halber nicht eingezeichnet.

Wie bereits oben erwähnt, ist in Fig. 7 ein erfindungsgemäßes Ausführungsbeispiel eines Wärme!eitungseiements 36 dargestellt. So weit die in Fig. 7 eingezeichneten Teile denen der in den Fign. 3 bis 6 dargestellten entsprechen, sind sie mit den gleichen Bezugszeichen versehen.

Der Unterschied der Gegenstände der Fign. 3 und 7 ist darin zu sehen, dass im Ausführungsbeispiel gemäß Fig. 7 auf ein separates Wärmeleitungselement verzichtet wird. Als bis in den Fahrgastraum hineinragendes Wärmeleitungselement 36 wird bei dem Ausführungsbeispiel gemäß Fig. 7 eine der beiden Elektroden 70 verwendet, die in dem Material des Gehäuses 62 des Sonnensensors 34 eingebettet sind. Die über diese Elektrode transportierte Wärme gelangt über das Anschlusskontaktelement 66 und weiter über die Leiterbahn 58 zum Anschlusskontaktende 54 des Temperaturfühlers 30.

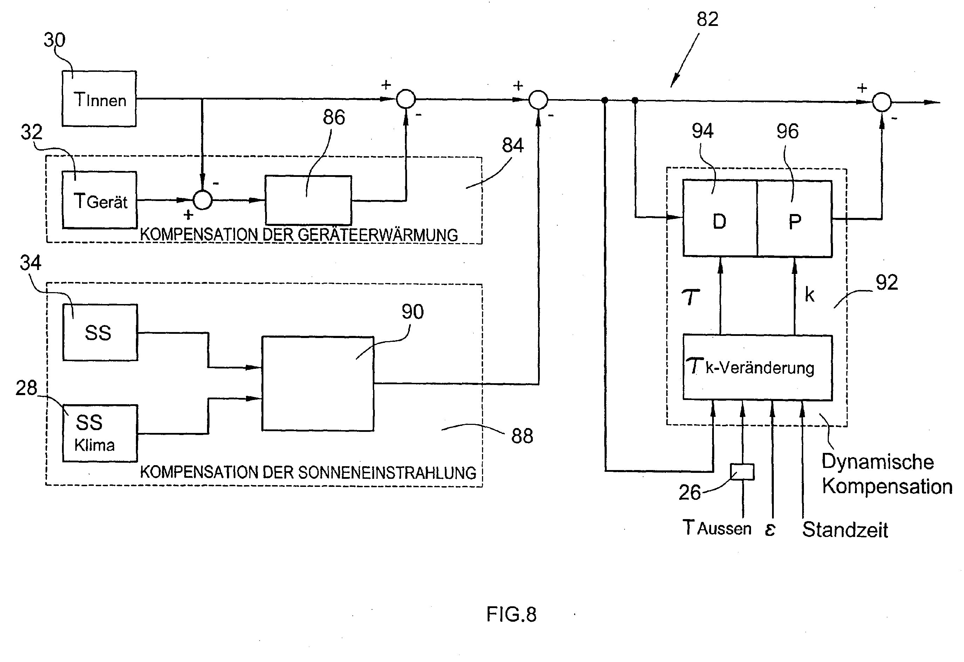

Sämtliche Messfühler (Temperaturfühler 30,32 und Sonnensensoren 28,34) sind gemäß Fig. 8 miteinander verschaltet, um anhand ihrer Messsignale auf die Temperatur im Fahrgastraum 10 schließen zu können. Fig. 3 zeigt das Blockschaltbild einer Verarbeitungseinheit 82.

Das Messsignal des hinter der Frontblende angeordneten Temperaturfühlers 30 ist beeinflusst durch die Steuergerät-Eigenerwärmung und die Erwärmung der Frontblende 18 infolge von Sonneneinstrahlung. Daher weist die Schaltung gemäß Fig. 8 eine Einheit 84 zur Kompensation der Geräteerwärmung auf. In dieser Einheit 38 werden die Messsignale der beiden Temperaturfühler 30,32 voneinander subtrahiert und das Differenzsignal einem Tiefpassfilter 86 zugeführt. Das Ausgangssignal des Tiefpassfilters 86 wird mit dem Messsignal des Temperaturfühlers 30 verschaltet, indem zwischen beiden die Differenz gebildet wird.

Die Schaltung gemäß Fig. 8 verfügt darüber hinaus über eine Einheit 88 zur Kompensation der Erwärmung der Frontblende 18 infolge der Sonneneinstrahlung. Der hierzu in der Frontblende 18 vorgesehene Sonnensensor 34 ist, wie oben beschrieben, in unmittelbarer Nähe des Temperaturfühlers 30 angeordnet. Grundsätzlich reicht es aus, wenn ausschließlich das Ausgangssignal des an der Frontblende 18 angeordneten Sonnensensors 34 ausgewertet wird. In speziellen Situationen kann es jedoch nützlich sein, durch Vergleich der Ausgangssignale des Klimaanlagen-Sonnensensors 28 und des Frontblenden-Sonnensensors 34 den Winkel und die Intensität der auf den Temperaturfühler 30 einwirkenden Sonnenstrahlung zu ermitteln. Dann nämlich kann die Erwärmung der Frontblende 18 durch die Sonne genauer bestimmt werden. Dies gilt insbesondere in den Fällen, in denen aufgrund platzbedingter Situationen auch seitlich auf den Sonnensensor 34 Sonnenstrahlung einwirkt. Das Ausgangssignal des Frontblenden-Temperaturfühlers 30 wird um das Ausgangssignal der Schaltungskomponente 90 zum Bewerten der Sonnensensorsignale der Einheit 88 kompensiert, was durch Subtraktion erfolgt.

Um das Messsignal des Frontblenden-Temperaturfühlers 30 auch während Temperatur-Transientenvorgängen für die Ermittlung der Temperatur im Fahrgastraum 10 möglichst schnell heranziehen zu können, ist es erforderlich, dieses Messsignal grundsätzlich unabhängig davon, ob es nun, wie vorstehend beschrieben, kompensiert ist oder nicht, einer dynamischen Kompensation zu unterziehen. Zu diesem Zweck ist die Schaltung gemäß Fig. 8 mit einer Dynamik-Kompensationseinheit 92 versehen. Diese Einheit 92 weist ein Differenzierglied 94 und ein Verstärkungsglied 96 auf, deren Zeitkonstante τ und Verstärkungsfaktor k veränderbar sind. Diese Veränderung erfolgt in Abhängigkeit von dem temperaturkompensierten Messsignal des Temperaturfühlers 30, der von dem Sensor 26 gemessenen Außentemperatur. der Standzeit des Fahrzeuges und der Differenz ε zwischen mit Sollwert und dem Istwert der Temperatur im Fahrgastraum 10. Bei dem Differenzierglied 94 handelt es sich um ein Langzeit-Differenzierglied, dessen Zeitkonstante im Bereich von einigen wenigen Minuten bis einigen 10 Minuten liegt. Durch die Differenzierung des gemessenen bzw. vorkompensierten Signals des Temperaturfühlers 30 werden Fehlmessungen ausgeglichen, die durch das gegenüber dem Temperaturfühler und dem Wärmeleitungselement 36, trägere Temperaturverhalten der anderen an den Fahrgastraum 10 angrenzenden Fahrzeugkomponenten verursacht werden. Der gesamte an den Fahrgastraum 10 angrenzende Fahrzeugbereich erwärmt sich nämlich wesentlich langsamer bzw. kühlt sich wesentlich langsamer ab als die Luft im Fahrgastraum 10. Dies muss bei der Messung der Temperatur im Fahrgastraum anhand des nahe der Frontblende 18 angeordneten Temperaturfühlers 30 berücksichtigt werden, was durch das Langzeit-Differenzierglied 94 erfolgt. Über das Proportionalglied 96 und insbesondere über eine Veränderung von dessen Verstärkungsfaktor kann eine Wichtung dieser Einflussfaktoren auf das Messsignal des Temperaturfühlers 30 vorgenommen werden.

Insgesamt ergibt sich mit der Beschaltung gemäß Fig. 8 und insbesondere mit der Langzeit-Differenzierung der Dynamik-Kompensationseinheit 92 eine komfortabel arbeitende Vorrichtung zu Ermittlung der Temperatur im Innern eines Fahrzeuges, ohne dass ein belüfteter Innenraum-Temperaturfühler eingesetzt wird. Die Vorteile des erfindungsgemäß eingesetzten "unbelüfteten" Temperaturfühlers sind in einer Erhöhung der Zuverlässigkeit der gesamten Vorrichtung zu sehen, da elektrische und mechanische Ausfälle von bewegbaren Komponenten nicht zu befürchten sind. Außerdem ergibt sich eine Kostenersparnis sowie eine erhöhte Funktionstüchtigkeit und ein Komfortvorteil, da die Gefahr akustischer Belästigungen ausgeschlossen ist.

## Patentansprüche

1. Vorrichtung zur Ermittlung der Temperatur im Innenraum eines Fahrzeuges, wobei die Vorrichtung zur Anordnung hinter einer Wand des Fahrzeuginnenraums vorgesehen ist, mit
- einem Temperaturfühler (30) zur Anordnung hinter einer an den Innenraum (10) angrenzenden Wand (18),
- einer Verarbeitungseinheit (82), die das Messsignal des Temperaturfühlers (30) empfängt und ein die Temperatur im Innenraum (10) des Fahrzeuges (12) repräsentierendes Ausgangssignal ausgibt,
- einem Wärmeleitungselement (36), das die Temperatur der Luft des Innenraums (10) innerhalb von dessen wandnahen Bereich erfasst, wobei das Wärmeleitungselement (36) in Wärmeleitkontakt mit dem Temperaturfühler (30) steht und sich durch eine Öffnung (38) in der Wand (18) erstreckt und
- einem ersten Sonnensensor (34), der in der Öffnung (38) der Wand (18) angeordnet ist, wobei der erste Sonnensensor (34) mit der Verarbeitungseinheit (82) elektrisch verbunden ist und in der Verarbeitungseinheit (82) der Einfluss der Erwärmung des Wandbereichs um die Wandöffnung (38) herum auf das Messsignal des Temperaturfühlers (30) korrigierbar ist,
- wobei der erste Sonnensensor (34) ein Gehäuse (62) aufweist, in dem eine Fotodiode und zu dieser führende Elektroden (70) angeordnet sind, und
- wobei das Wärmeleitungselement (36) allein durch eine der Elektroden (70) gebildet ist.

2. Vorrichtung nach Anspruch 1, **dadurch gekennzeichnet, dass** der Temperaturfühler (30) elektrische Anschlusskontaktelemente (52) aufweist und dass das Wärmleitungselement (36) mit einem der Anschlusskontaktelemente (52) des Temperaturfühlers (30) wärmeleitend verbunden ist.

3. Vorrichtung nach Anspruch 1 oder 2, **dadurch gekennzeichnet, dass** der Temperaturfühler (30) als SMD-Bauteil ausgeführt ist.

4. Vorrichtung nach einem der Ansprüche 1 bis 3, **dadurch gekennzeichnet, dass** der Temperaturfühler (30) mit Leiterbahnen (56,58) einer Leiterplatine (42) verbunden ist und dass das Wärmeleitungselement (36) mit einer der zu dem Temperaturfühler (30) führenden Leiterbahnen (56,58) wärmeleitend verbunden ist.

5. Vorrichtung nach einem der Ansprüche 1 bis 4, **dadurch gekennzeichnet, dass** der Temperaturfühler (30) von einem Wärmeabschirmelement aus einem wärmeisolierenden Material umgeben ist.

6. Vorrichtung nach Anspruch 5, **dadurch gekennzeichnet, dass** das wärmeisolierende Material ein Schaumstoff ist.

7. Vorrichtung nach einem der Ansprüche 1 bis 6, **dadurch gekennzeichnet, dass** das eine Anschlusskontaktelement (66) des ersten Sonnensensors (34) und das Anschlusskontaktelement (52) des Temperaturfühlers (30) auch elektrisch miteinander verbunden sind.

8. Vorrichtung nach einem der Ansprüche 1 bis 7, **dadurch gekennzeichnet, dass** in der Verarbeitungseinheit (82) der Einfluss der Temperatur einer nahe dem Temperaturfühler angeordneten Fahrzeugkomponente korrigierbar ist.

9. Vorrichtung nach Anspruch 8, dass die Fahrzeugkomponente das Steuergerät für eine Fahrzeugklimaanlage ist.

10. Vorrichtung nach Anspruch 9, **dadurch gekennzeichnet, dass** die Temperatur der Fahrzeugkomponente direkt durch einen weiteren Temperaturfühler (32) messtechnisch und/oder indirekt infolge des aktuellen Betriebszustandes der Fahrzeugkomponente ermittelbar ist.

11. Vorrichtung nach Anspruch 10, **dadurch gekennzeichnet, dass** die Fahrzeugkomponente eine Frontseiten-Hinterleuchtung und/oder ein ausgeleuchtetes Display (20) aufweist und dass zur indirekten Erfassung der Temperatur der Fahrzeugkomponente die Steuerspannungen für die Hinterleuchtung und/oder Display-Beleuchtung herangezogen werden.

12. Vorrichtung nach einem der Ansprüche 1 bis 11, **dadurch gekennzeichnet, dass** die Verarbeitungseinheit (82) ein Differenzierglied (94) mit einer Zeitkonstante (τ) zur Langzeitdifferenzierung des Messsignals und/oder des gegebenenfalls korrigierten Messsignals des Temperaturfühlers (30) aufweist, wobei die Verarbeitungseinheit (82) das Messsignal oder das korrigierte Messsignal und das differenzierte Messsignal addiert, und dass die Addition dieser beiden Signale die Temperatur im Innenraum (10) des Fahrzeuges repräsentiert.

13. Vorrichtung nach einem der Ansprüche 1 bis 12, **dadurch gekennzeichnet, dass** die Verarbeitungseinheit (82) ein Verstärkungsglied (96) mit einem Verstärkungsfaktor zum Verstärken des Messsignals und/oder des differenzierten und/oder korrigierten Messsignals des Temperaturfühlers (30) aufweist.

14. Vorrichtung nach Anspruch 10 oder 12, **dadurch gekennzeichnet, dass** die Zeitkonstante (τ) des Differenziergliedes (94) und/oder der Verstärkungsfaktor (k) des Verstärkungsgliedes (96) in Abhängigkeit von dem Messsignal und/oder dem korrigierten Messsignal des Temperaturfühlers (30), der Standzeit des Fahrzeuges, der Umgebungstemperatur des Fahrzeuges, der Abweichung zwischen dem Ist- und dem Sollwert der Fahrzeuginnenraumtemperatur oder der Temperatur der in den Fahrzeuginnenraum (10) einströmenden Luft und/oder der Kühlwassertemperatur wählbar und/oder korrigierbar ist.

## Claims

1. A device for determining the temperature in the interior of a vehicle, the device being provided for arrangement behind a wall of the vehicle interior, comprising:
- a temperature sensor (30) for arrangement behind a wall (18) adjacent the interior (10),
- a processing unit (82) receiving a measuring signal from the temperature sensor (30) and outputting an output signal representing the temperature in the interior (10) of the vehicle (12),
- a thermal conductor element (36) for sensing the temperature of the air in the interior (10) in a region thereof close to the wall, the thermal conductor element (36) being in thermally conductive contact with the temperature sensor (30) and extending through an opening (38) in the wall (18), and
- a first solar sensor (34) arranged in the opening (38) in the wall (18), the first solar sensor (34) being electrically connected to the processing unit (82), and wherein, in the processing unit (82), the influence of the heating of the wall portion around the wall opening (38) on the measuring signal of the temperature sensor (30) can be corrected,
- the first solar sensor (34) comprises a housing (62) in which a photodiode and electrodes (70) leading to the same are arranged, and
- the thermal conductor element (36) is formed by one of the electrodes (70) alone.

2. The device of claim 1, **characterized in that** the temperature sensor (30) comprises electric terminal elements (52) and that the thermal conductor element (36) is in thermally conductive contact with one of the terminal elements (52) of the temperature sensor (30).

3. The device of claim 1 or 2, **characterized in that** the temperature sensor (30) is configured as a SMD component.

4. The device of one of claims 1 to 3, **characterized in that** the temperature sensor (30) is connected with conductor paths (56, 58) of a circuit board (42), and that the thermal conductor element (36) is in thermally conductive connection with one of the conductor paths (56, 58) leading to the temperature sensor (30).

5. The device of one of claims 1 to 4, **characterized in that** the temperature sensor (30) is surrounded by heat shield element made of a thermally insulating material.

6. The device of claim 5, **characterized in that** the thermally insulating material is a foam material.

7. The device of one of claims 1 to 6, **characterized in that** the one terminal element (66) of the first solar sensor (34) and the terminal element (52) of the temperature sensor (30) are also electrically interconnected.

8. The device of one of claims 1 to 7, **characterized in that**, in the processing unit (82), the influence of the temperature of a vehicle component close to the temperature sensor can be corrected.

9. The device of claim 8, **characterized in that** the vehicle component is the control device of a vehicle air-condition system.

10. The device of claim 9, **characterized in that** the temperature of the vehicle component can be determined directly by another temperature sensor (32) through mensuration and/or indirectly from the current operational condition of the vehicle component.

11. The device of claim 10, **characterized in that** the vehicle component has a front face back-light and/or a lit display (20), and that for an indirect determination of the temperature of the vehicle component, the control voltages for the back-light and/or the display lighting are used.

12. The device of one of claims 1 to 11, **characterized in that** the processing unit (82) comprises a differentiating element (94) with a time constant (τ) for long-term differentiation of the measuring signal and/or the possibly corrected measuring signal of the temperature sensor (30), wherein the processing unit (82) adds the measuring signal or the corrected measuring signal and the differentiated measuring signal, and wherein the sum of these two signals represents the temperature in the interior (10) of the vehicle.

13. The device of one of claims 1 to 12, **characterized in that** the processing unit (82) comprises an amplification element (96) with an amplification factor for amplifying the measuring signal and/or the differentiated and/or the corrected measuring signal of the temperature sensor (30).

14. The device of claim 10 or 12, **characterized in that** the time constant (τ) of the differentiating element (94) and/or the amplification factor (k) of the amplification element (96) are selectable and/or corrigible in dependence from the measuring signal and/or the corrected measuring signal of the temperature sensor (30), the parking time of the vehicle, the ambient temperature of the vehicle, the deviation between the actual and the set values of the temperature of the vehicle interior or the temperature of the air flowing into the interior (10) of the vehicle and/or the coolant water temperature.

## Revendications

1. Dispositif pour évaluer la température dans l'habitacle d'un véhicule, le dispositif étant prévu pour être disposé derrière une paroi de l'habitacle du véhicule, comprenant
- un capteur de température (30) à disposer derrière une paroi (18) adjacente à un habitacle (10),
- une unité de traitement (82) recevant le signal de mesure du capteur de température (30) et faisant sortir un signal de sortie représentant la température dans l'habitacle (10) du véhicule (12),
- un élément de conduction thermique (36) captant la température de l'air dans l'habitacle (10) dans la région de l'habitacle près de la paroi, ledit élément de conduction thermique (36) étant en contact de conduction thermique avec le capteur de température (30) et s'étendant à travers une ouverture (38) dans ladite paroi (18), et
- un premier capteur solaire (34) positionné dans ladite ouverture (38) de la paroi (18), ledit premier capteur solaire (34) étant raccordé électriquement à ladite unité de traitement (82,) et l'influence de l'échauffement de la région de la paroi autour de ladite ouverture (38) de la paroi sur le signal de mesure du capteur de température (30) peut être corriger dans ladite unité de traitement (82),
- ledit premier capteur solaire (34) comprenant un boîtier (62) dans lequel sont disposés une photodiode et des électrode (70) menant à la photodiode, et
- l'élément de conduction thermique (36) est formé seul par une des électrodes (70).

2. Dispositif selon la revendication 1, **caractérisé en ce que** le capteur de température (30) comprend des éléments de connexion électrique (52) et que l'élément de conduction thermique (36) est raccordé de manière thermoconductrice à un des éléments de connexion (52) du capteur de température (30).

3. Dispositif selon la revendication 1 et 2, **caractérisé en ce que** le capteur de température (30) est configuré comme un élément SMD.

4. Dispositif selon l'une quelconque des revendications 1 à 3, **caractérisé en ce que** le capteur de température (30) est raccordé à des pistes conductrices (56, 58) d'une carte imprimée (42), et que l'élément de conduction thermique (36) est raccordé de manière thermoconductrice à une des pistes conductrices (56, 58) menant au capteur de température (30).

5. Dispositif selon l'une quelconque des revendications 1 à 4, **caractérisé en ce que** le capteur de température (30) est entouré d'un élément de blindage thermique formé d'un matériau isolant thermiquement.

6. Dispositif selon la revendication 5, **caractérisé en ce que** le matériau isolant thermiquement est un matériau mousse.

7. Dispositif selon l'une quelconque des revendications 1 à 6, **caractérisé en ce qu'**un des éléments de connexion (66) dudit capteur solaire (34) et l'élément de connexion (52) dudit capteur de température (30) sont aussi raccordés électriquement.

8. Dispositif selon l'une quelconque des revendications 1 à 7, **caractérisé en ce que** l'influence de la température d'un composant du véhicule situé près du capteur de température peut être corriger dans ladite unité de traitement (82).

9. Dispositif selon la revendication 8, **caractérisé en ce que** le composant du véhicule est la commande de la climatisation du véhicule.

10. Dispositif selon la revendication 9, **caractérisé en ce que** la température dudit composant du véhicule peut être déterminée directement par mesurage utilisant un autre capteur de température (32) et/ou indirectement par l'état de fonctionnement actuel dudit composant du véhicule.

11. Dispositif selon la revendication 10, **caractérisé en ce que** le composant du véhicule comprend une rétro éclairage de la face frontale et/ou un display (20) illuminé, et que les voltages de commande de ladite rétro éclairage et/ou l'illumination du display sont utilisés pour la détection indirecte de la température du composant du véhicule.

12. Dispositif selon l'une quelconque des revendications 1 à 11, **caractérisé en ce que** l'unité de traitement (82) comprend un élément de différentiation (94) avec une constante de temps (τ) pour la différentiation à long terme du signal de mesure et/ou du signal de mesure éventuellement corrigé su capteur de température (30), l'unité de traitement (82) additionnant le signal de mesure ou le signal de mesure corrigé et le signal de mesure différentié, et que l'addition des deux signaux représente la température dans l'habitacle (10) du véhicule.

13. Dispositif selon l'une quelconque des revendications 1 à 12, **caractérisé en ce que** l'unité de traitement (82) comprend un élément amplificateur (96) pour l'amplification du signal de mesure et/ou du signal de mesure différentié et/ou corrigé du capteur de température (30).

14. Dispositif selon la revendication 10 ou 12, **caractérisé en ce que** la constante de temps (τ) dudit élément de différentiation (94) et/ou le facteur d'amplification (k) dudit élément amplificateur (96) peuvent être sélectionnés et/ou corrigés en fonction du signal de mesure et/ou du signal de mesure corrigé du capteur de température (30), du temps d'attente du véhicule, de la température ambiante du véhicule, de la différence entre la valeur actuelle et la valeur de consigne de la température de l'habitacle du véhicule ou la température de l'air s'écoulant dans l'habitacle (10) du véhicule, et/ou de la température de l'eau de refroidissement.
